# EUROPEAN PATENT APPLICATION

(11) **EP 4 804 590 A1**
(43) Date of publication of application: **09.09.2026**
(21) Application number: 23957207.6
(22) Date of filing: 01.11.2023
(51) Int. Cl.: H04W 24/02

(54) **AI FUNCTIONALITY CONFIGURATION METHOD AND APPARATUS**

(71) Applicant: 1FINITY INC., Kawasaki-shi, Kanagawa 211-8588 (JP)
(72) Inventor: GENG, Tingting, Beijing 100022 (CN)
(74) Representative: Haseltine Lake Kempner LLP
(86) International application number: PCT/CN2023/129102
(87) International publication number: WO 2025/091334

(57) **Abstract**

Embodiments of the present disclosure provide a method and an apparatus for configuring AI functionalities, the method comprising: a terminal equipment receives first configuration information transmitted by a network device, the first configuration information being used to configure at least one AI functionality of the terminal equipment; and the terminal equipment configures the at least one AI functionality according to the first configuration information. According to embodiments of the present disclosure, the network device may control, to some extent, a model activated at a terminal equipment side in functionality based LCM, or, the network device may perceive information on a model activated at a terminal equipment side in functionality based LCM, thereby better implementing functionalities/model control.

## Description

### TECHNICAL FIELD

Embodiments of the present disclosure relate to the technical field of communications.

### BACKGROUND

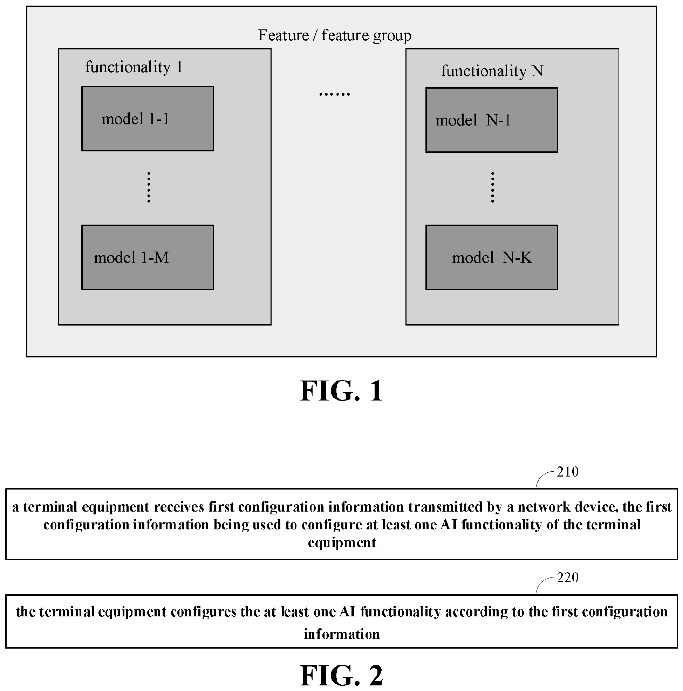

In 3GPP R18 artificial intelligence/machine learning (AI/ML) topics, a plurality of scenarios or sub-scenarios are defined, such as CSI enhancement (which may further include at least one sub-scenario in CSI compression and CSI prediction), beam management, positioning, or other scenarios. Different scenarios or sub-scenarios may correspond to one or more features/feature groups. The above feature(s)/feature group(s) applied with AI/ML is/are called an AI/ML-based/enabled feature(s)/feature group(s). One AI/ML-based/enabled feature/feature group may correspond to one or more AI functionalities, and/or one or more AI models. One AI functionality may further correspond to one or more AI models. Possible logic is as shown in FIG.1.

Life cycle management (LCM) corresponding to an AI/ML-based/enabled feature/feature group may be divided into functionality based LCM and model-ID based LCM according to functionality granularity or model (model-ID) granularity. LCM may include at least one of the following: data collection, model training, model inference, model monitoring, model/functionality control, model update, model transfer/delivery, model storage, UE capability reporting, or other procedures. Model/functionality control further includes at least one of AI operations: at least one of selection, activation, deactivation, switch, fallback, release, or suspend of a model/functionality. Fallback refers to fallback to a mode in which AI is not applied.

It should be noted that the above introduction to the technical background is just to facilitate a clear and complete description of technical solutions of the present disclosure, and is elaborated to facilitate understanding of persons skilled in the art. It cannot be considered that the technical solutions are known by persons skilled in the art just because these solutions are elaborated in Background of the present disclosure.

### SUMMARY

Inventors find that in a functionality based LCM mechanism, if an AI model corresponding to a feature/feature group is deployed at a terminal equipment side, i.e., the AI model is a UE-sided model, when a network device configures AI operations, the network device may only perceive functionality-level AI operations and may not perceive model-level operations within a terminal equipment. That is, a network device only needs to perceive whether a terminal equipment has performed AI operations for the feature/feature group and what AI operations have been performed, without perceiving model information executed by a terminal equipment after AI is enabled for the feature/feature group. For example, an AI model corresponding to feature/feature group 1 includes model 1, model 2, and model 3. When a network device transmits configuration information corresponding to the feature/feature group 1 to indicate a terminal equipment to activate functionality 1, i.e., indicate that the terminal equipment activates AI based/enabled feature/feature group 1, the terminal equipment may choose to activate model 1, or deactivate model 1 and switch to activating model 2. The above model-level operations are transparent to the network device. That is, a network device may configure AI operations, and a terminal equipment selects a model within the activated functionality.

It may be seen that in existing functionality based LCM, a network device is unable to participate in model selection within a functionality at a terminal equipment side, which may result in that a model selected by a terminal equipment does not meet expectations of a network device.

For at least one of the above problems or other similar problems, embodiments of the present disclosure provide a method and an apparatus for configuring AI functionalities, so that a network device may control, to some extent, a model activated at a terminal equipment side in functionality based LCM, or so that a network device may perceive information on a model activated at a terminal equipment side in functionality based LCM, thereby better implementing functionalities/model control.

According to an aspect of embodiments of the present disclosure, an apparatus for configuring AI functionalities is provided, configured in a terminal equipment, wherein the apparatus includes:
a receiving unit configured to receive first configuration information transmitted by a network device, the first configuration information being used to configure at least one AI functionality of the terminal equipment; and
a configuring unit configured to configure the at least one AI functionality according to the first configuration information.

According to another aspect of embodiments of the present disclosure, an apparatus for configuring AI functionalities is provided, configured in a network device, wherein the apparatus includes:
a first transmitting unit configured to transmit first configuration information to a terminal equipment, the first configuration information being used to configure at least one AI functionality of the terminal equipment; and
a second transmitting unit configured to transmit first indication information and/or second indication information to the terminal equipment, the first indication information being used to indicate model configuration information of the at least one AI functionality, preferred by the network device, and the second indication information being used to indicate that the terminal equipment transmits activated model information of the at least one AI functionality to the network device.

One of advantageous effects of embodiments of the present disclosure lies in that: according to embodiments of the present disclosure, the network device may control, to some extent, a model activated at a terminal equipment side in functionality based LCM, or, the network device may perceive information on a model activated at a terminal equipment side in functionality based LCM, thereby better implementing functionalities/model control.

Referring to later descriptions and drawings, specific implementations of the present disclosure are disclosed in detail, indicating modes in which principles of the present disclosure may be adopted. It should be understood that implementations of the present disclosure are not limited in terms of a scope. Within scopes of spirits and terms of attached claims, implementations of the present disclosure include many changes, modifications, and equivalents.

Feature(s) described and/or shown for one implementation may be used in one or more other implementations in the same way or in a similar way, and may be combined with or replace features in other implementations.

It should be emphasized that term "include/contain" when being used herein refers to presence of a feature, a whole piece, a step, or a component, but does not exclude presence or addition of one or more other features, whole pieces, steps, or components.

### BRIEF DESCRIPTION OF DRAWINGS

Element(s) and feature(s) described in one drawing or one implementation of embodiments of the present disclosure may be combined with element(s) and feature(s) shown in one or more other drawings or implementations. In addition, in the drawings, similar reference signs denote corresponding components in several drawings and may be used to indicate corresponding components used in more than one implementation.
FIG. 1 is a logical schematic diagram of an AI functionality and a corresponding AI model thereof;
FIG. 2 is a schematic diagram of a method for configuring AI functionalities in embodiments of a first aspect of the present disclosure;
FIG. 3 is a schematic diagram of information exchange between a terminal equipment and a network device according to a method in the above embodiments;
FIG. 4 is another schematic diagram of information exchange between a terminal equipment and a network device according to a method in the above embodiments;
FIG. 5 is a schematic diagram of a method for configuring AI functionalities in embodiments of a second aspect of the present disclosure;
FIG. 6 is a schematic diagram of an apparatus for configuring AI functionalities in embodiments of a third aspect of the present disclosure;
FIG. 7 is another schematic diagram of an apparatus for configuring AI functionalities in embodiments of a third aspect of the present disclosure;
FIG. 8 is a schematic diagram of a communication system in embodiments of the present disclosure;
FIG. 9 is a schematic diagram of a terminal equipment in embodiments of the present disclosure;
FIG. 10 is a schematic diagram of a network device in embodiments of the present disclosure.

### DETAILED DESCRIPTION

Referring to the drawings, through the following Specification, aforementioned and other features in the present disclosure will become obvious. The Specification and the drawings specifically disclose specific implementations of the present disclosure, indicating partial implementations for which principles of the present disclosure may be adopted. It should be understood that the present disclosure is not limited to described implementations, on the contrary, the present disclosure includes all modifications, variations and equivalents falling within scopes of attached claims.

In embodiments of the present disclosure, terms "first" and "second", etc. are used to distinguish different elements in terms of appellation, but do not represent a spatial arrangement or time sequence, etc. of these elements, and these elements should not be limited by these terms. Term "and/or" includes any one of and all combinations of one or more of terms listed in an associated manner. Terms "contain", "include" and "have", etc. refer to presence of stated feature(s), element(s), component(s), or assembly/assemblies, but do not exclude presence or addition of one or more other features, elements, components, or assemblies.

In embodiments of the present disclosure, singular forms "a/an" and "the", etc. include plural forms, and should be understood broadly as "a kind of" or "a type of", but are not defined as the meaning of "one", in addition, term "the" should be understood to include both singular forms and plural forms, unless the context clearly indicates otherwise. In addition, term "according to" should be understood as "at least partially according to......", and term "based on" should be understood as "at least partially based on......", unless the context clearly indicates otherwise.

In embodiments of the present disclosure, a scenario containing a network device and/or a terminal equipment is taken as an example.

In the above scenario, a network device may include at least one of a core network device, a third-party application device, an operation administration and maintenance (OAM) device, and an access network device.

The core network device may refer to a device in a core network (CN) providing service support for terminal equipments. As some instance, a core network device may be at least one of the following: a mobility and management entity (MME), an access and mobility management function (AMF) entity, a session management function (SMF) entity, a user plane function (UPF) entity, a Location Management Function (LMF) entity, etc., which are not exhaustively listed here. AMF entity may be responsible for access management and mobility management of a terminal, SMF entity may be responsible for session management, such as session establishment of a user, and UPF entity may be a functional entity of a user plane and be primarily responsible for connecting to external networks. LMF entity may manage overall coordination and scheduling of resources required for positions of terminal equipments registered with or accessing a core network device. It should be noted that in embodiments of the present disclosure, an entity may also be called a network element or a functional entity. For example, an AMF entity may also be called an AMF network element or an AMF functional entity, and so on.

The third-party application device may be an OTT server (over the top server) or other third-party device.

The OAM device may be a network device performing management work such as operation, administration, and maintenance, etc. on a network according to actual needs of an operator's network operations.

The access network device is an access device through which a terminal equipment wirelessly accesses a communication system. The access network device may be a base station (BS), an evolved NodeB (eNodeB), a transmission reception point (TRP), a base station (next generation NodeB, gNB) in a 5th generation (5G) mobile communication system, a base station in a 6th generation (6G) mobile communication system, a base station in a future mobile communication system or an access node in a WiFi system, etc. The access network device may further be a module or an unit that completes part of functions of a base station, for example, may be at least one of the following modules or units: a central unit (CU), a distributed unit (DU), a CU control plane (CU-CP), a CU user plane (CU-UP), an Integrated Access Backhaul (IAB) or other module or unit. Embodiments of the present disclosure do not make restriction on specific technologies and/or specific device forms adopted by an access network device. The access network device may be deployed on land, including indoors/outdoors, and may be handheld or vehicle-mounted; may further be deployed on water surfaces, on planes, on balloons, or on satellites. The access network device may be deployed in a fixed location or on a mobile carrier. Embodiments of the present disclosure do not make restriction in this regard.

In the above scenarios, the terminal equipment may be a device with a wireless transceiving function, may transmit signals to the access network device and/or receive signals from the access network device. The terminal equipment may also be called a terminal, a mobile station, a mobile terminal, etc. The terminal equipment may be a mobile phone, a tablet, or other devices with a wireless smart transceiving function. The terminal equipment may be widely applied in various scenarios, such as device-to-device (D2D) communication, vehicle-to-everything (V2X) communication, machine-type communication (MTC), Internet of Things (IoT), virtual reality, augmented reality, industrial control, autonomous driving, telemedicine, or various smart scenarios.

In the above scenarios, communication between the access network device and the terminal equipment and communication between terminal equipments may be performed via licensed spectrum, or via unlicensed spectrum, or via both licensed spectrum and unlicensed spectrum simultaneously. Embodiments of the present disclosure do not make restriction on spectrum resources used for wireless communications.

Embodiments of the present disclosure are described below in conjunction with the drawings and specific implementations. For ease of description, the following text takes a base station as an example of an access network device for description. In the following description, without causing confusion, "if...", "in a case where..." and "when..." may be used interchangeably.

### Embodiments of a First Aspect

Embodiments of the present disclosure provide a method for configuring AI functionalities, which is described from a terminal equipment side.

FIG. 2 is a schematic diagram of the method for configuring AI functionalities in embodiments of the present disclosure, as shown in FIG. 2, the method includes:
210: a terminal equipment receives first configuration information transmitted by a network device, the first configuration information being used to configure at least one AI functionality of the terminal equipment; and
220: the terminal equipment configures the at least one AI functionality according to the first configuration information.

It is worth noting that the above FIG. 2 only schematically describes embodiments of the present disclosure, however the present disclosure is not limited thereto. For example, some other operations may be added or certain operations therein may be reduced. Persons skilled in the art may make appropriate modifications according to the above contents, not being limited to records in the above FIG. 2.

According to the above embodiments, the terminal equipment configures corresponding AI functionalities according to first configuration information transmitted by the network device, thereby the network device may control, to some extent, a model activated at a terminal equipment side in functionality based LCM, or, the network device may perceive information on a model activated at a terminal equipment side in functionality based LCM, thereby better implementing functionalities/model control.

In the above embodiments, first configuration information includes, for example, configuration information corresponding to the following AI operations: at least one of activation, deactivation, switch, fallback, release, or suspend of an AI functionality. Correspondingly, a terminal equipment may configure the at least one AI functionality according to the first configuration information, for example, by activating corresponding AI functionalities, deactivating corresponding AI functionalities, switching corresponding AI functionalities, triggering corresponding AI functionalities to fall back to a non-AI configuration, releasing corresponding AI functionalities, suspending corresponding AI functionalities, and so on. The above contents on the first configuration information are merely examples for description. According to configuration need(s), other configurations may further be performed on corresponding AI functionalities. For details, relevant technologies may be referred to, and descriptions are omitted here.

In some embodiments, the terminal equipment may further receive first indication information, the first indication information being used to indicate model configuration information of the at least one AI functionality, preferred by a network device. It is understandable that the network device may inform the terminal equipment of model configuration information preferred by the network device via the first indication information, thereby the terminal equipment may determine a corresponding model according to the indication from the network device.

In the above embodiments, no limitation is imposed on a transmission mode of the first configuration information and the first indication information. For example, the first configuration information and the first indication information may be transmitted via the same message or via different messages. For another example, the first configuration information may include the first indication information, or the first configuration information and the first indication information may be two parallel pieces of information within the same message, and so on.

In the above embodiments, the model configuration information preferred by the network device may include, for example, at least one of the following:
model information preferred by the network device;
network configuration information of a model preferred by the network device;
inference accuracy configuration information preferred by the network device;
inference latency configuration information preferred by the network device;
inference output result information preferred by the network device;
inference credibility configuration information preferred by the network device;
network device vendor information corresponding to a model preferred by the network device;
terminal equipment vendor information corresponding to a model preferred by the network device; or
chip device vendor information corresponding to a model preferred by the network device.

According to the above information, the terminal equipment may determine a model preferred by the network device, thereby performing corresponding model selection by referring to the model configuration information when selecting a model of the at least one AI functionality.

In the above information, the model information preferred by the network device may be at least one identifier information for identifying a model preferred by the network device.

In the above information, the network configuration information of a model preferred by the network device may include, for example, at least one of the following:
network antenna configuration information, e.g., configuration information such as tilt angle information under an antenna, the number of antennas, an analog antenna, a digital antenna, and a physical antenna, etc.;
network beam configuration information, e.g., configuration information such as beam width information, the number of beams, and beam scanning information, etc.;
network coverage configuration information, e.g., configuration information such as frequency point information, coverage range information, indoor, and outdoor, etc.; or
network state information, e.g., whether capacity stations and coverage stations enable network energy saving, and network energy saving configuration information, etc.

In the above information, the inference accuracy configuration information preferred by the network device may be, for example, inference accuracy threshold information; correspondingly, the terminal equipment may determine a model with an inference accuracy preferred by the network device being higher than or equal to the inference accuracy threshold.

In the above information, the inference latency configuration information preferred by the network device may be, for example, inference latency threshold information; correspondingly, the terminal equipment may determine a model with an inference latency preferred by the network device being less than or equal to the inference latency threshold.

In the above information, the inference output result information preferred by the network device may be, for example, that if inference output results of a model of the same functionality are not completely identical, the inference output result information is used to indicate an inference output result preferred by the network device.

In the above information, the inference credibility configuration information preferred by the network device may be, for example, inference credibility threshold information; correspondingly, the terminal equipment may determine a model with an inference credibility preferred by the network device being higher than or equal to the inference credibility threshold.

In the above information, the vendor information may be vendor identifier information, may be used to indicate a vendor training a model, or may be used to indicate a vendor when the terminal equipment receives a model.

The above are just examples for description, the present disclosure does not impose limitations on specific implementations of the network configuration information and other information in the model configuration information.

In the above embodiments, that the terminal equipment configures at least one AI functionality according to the first configuration information e.g., may be that: the terminal equipment determines information on an available model of the at least one AI functionality according to the first configuration information and the first indication information.

According to the above embodiments, the model configuration information of the at least one AI functionality, preferred by the network device and indicated by the first indication information, serves as a basis for the terminal equipment to screen a model, thereby the network device may, to some extent, control a model configured at a terminal equipment side in functionality based LCM (which may also be called a model for the terminal equipment to perform AI operations), which improves flexibility of a network device's control over a model in a terminal equipment in functionality based LCM.

Optionally, in the above embodiments, the terminal equipment may further transmit a first response message to the network device, via the first response message indicating, whether the terminal equipment successfully configures the at least one AI functionality according to the first configuration information and the first indication information is indicated.

In the above embodiments, the first response message may include information on an AI functionality that is successfully configured in the at least one AI functionality, and may further include information on an AI functionality that is not successfully configured in the at least one AI functionality, the present disclosure is not limited thereto, the first response message may include both pieces of the aforementioned information, i.e., includes information on an AI functionality that is successfully configured in the at least one AI functionality and includes information on an AI functionality that is not successfully configured in the at least one AI functionality.

In the above embodiments, if the terminal equipment fails to successfully configure at least one AI functionality in the at least one functionality, the first response message may further include a failure cause for the at least one AI functionality that is not successfully configured, so as to inform a network device.

In the above embodiments, the failure cause e.g. may be that there is no available model, for another example may be that an available model is unable to be determined according to the first indication information, or a configuration transmitted by the network device is not supported, or AI resources are not sufficient, or information on insufficient AI resources, etc.

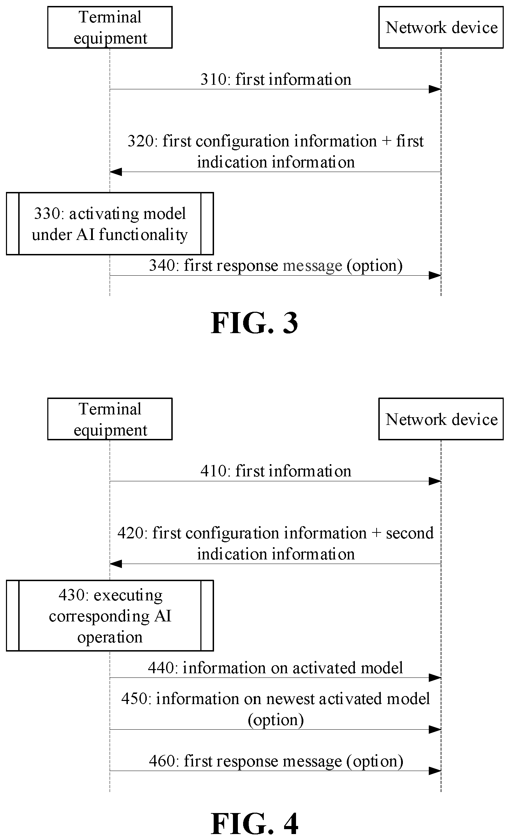

FIG. 3 is a schematic diagram of information exchange between a terminal equipment and a network device according to the method in the above embodiments. In an example in FIG. 3, that an AI operation configured by the first configuration information is "activation" is taken as an example, however the present disclosure is not limited thereto, the AI operation configured by the first configuration information may further be any one or more of those listed above. As shown in FIG. 3, a process of the information exchange includes:
310: the network device receives first information, the first information being used to indicate information related to an AI functionality;
320: the network device transmits first configuration information to the terminal equipment, the first configuration information including first indication information, the first indication information being used to indicate model configuration information of the AI functionality, preferred by the network device;
330: the terminal equipment activates a model of the AI functionality according to the first configuration information; and
340: the terminal equipment transmits a first response message to the network device, via the first response message indicating, whether the terminal equipment successfully activates the AI functionality is indicated.

It is worth noting that the above FIG. 3 only schematically describes embodiments of the present disclosure, however the present disclosure is not limited thereto. For example, some other operations may be added or certain operations therein may be reduced. Persons skilled in the art may make appropriate modifications according to the above contents, not being limited to records in the above FIG. 3.

In operation 310, the first information is used to indicate information related to an AI functionality, and the first information may include at least one of the following:
e.g. identifier information of a functionality of an AI/ML-based feature/feature group supported by the terminal equipment. The identifier information may be an identity/identifier ID, an index, or other information for identifying a functionality. For example, when bit information in a bitstring corresponds to a functionality, at least one bit in the bitstring may indicate a corresponding functionality. For example, a maximum number of functionalities of an AI/ML-based feature/feature group supported by the terminal equipment or the Standard is 8, and the bitstring includes 8 bits. As an example, the first bit of the bitstring corresponds to a functionality with the smallest or largest identifier information, the second bit of the bitstring corresponds to a functionality with the second smallest or second largest identifier information, and so on, which will not be further described in detail herein.

Optionally, the first information may further indicate information on at least one model of a functionality. Information on the model may include at least one of the following: model identifier information, or model running information. The model identifier information is used to identify the model, and the model running information is used to indicate demand information for running the model. The demand information may be information used to indicate AI resource needed to run the model, and may further be information used to indicate network configuration needed to run the model, e.g. at least one of network device vendor information, terminal equipment vendor information, and chip device vendor information corresponding to the model. Further, first information may further indicate storage information of the model. It is understandable that the storage information of the model may be at a model level, that is, indicating whether a terminal equipment has stored the model.

It is understandable that when first information includes at least one of the above pieces of information, the network device may receive the first information via the same message or via different messages.

In an example in FIG. 3, that the network device receives the first information from the terminal equipment is taken as an example, however the present disclosure is not limited thereto, the network device may further receive the first information from an access network device and/or a core network device.

In operation 320, the model configuration information is a limiting condition for the terminal equipment to perform AI functionality configuration, and the network device uses the model configuration information to limit the terminal equipment when performing AI functionality configuration, which achieves control of a network device over model selection of an AI functionality of a terminal equipment in functionality based LCM. For relevant content of the model configuration information, operation 210 may be referred to, and details are not repeated here.

In operation 320, the first configuration information may further include identifier information of an activated AI functionality, that is, the network device configures an activated AI functionality for the terminal equipment via the first configuration information. For details, operation 210 is referred to, and details are not repeated here.

Thus, the terminal equipment may determine whether there is an available model of an AI functionality preferred by the network device configured by the network device, according to the first configuration information and the first indication information, and if yes, operation 330 is executed.

In operation 330, description is made by taking that the terminal equipment activates the AI functionality as an example. As other possible implementations, the terminal equipment may further deactivate the AI functionality, or switch the AI functionality, or fall back the AI functionality to a non-AI configuration, or release the AI functionality, or suspend the AI functionality, etc.

In operation 340, the terminal equipment may inform the network device, via the first response message, whether an available model of the activated AI functionality preferred by the network device configured by the network device has been successfully activated. If the terminal equipment does not successfully activate the available model of the activated AI functionality preferred by a network device, the terminal equipment may further indicate a failure cause in the first response message. As for the failure cause, it has been described in the preceding text and will not be repeated here.

If in 320, the first configuration information transmitted by the network device is associated with a plurality of AI functionalities, for example the first configuration information includes identifier information of two activated AI functionalities, and the terminal equipment only activates part of AI functionalities in operation 330, for example only activates a model of one AI functionality, in operation 340, the terminal equipment may indicate, via the first response message, information on an AI functionality that is successfully activated and/or information on an AI functionality that is not successfully activated. For example, in a case where the first response message includes information on an AI functionality that is not successfully activated, a failure cause may be further included. For description of the failure cause, description in other embodiments of the present disclosure is referred to and is not repeated here.

In the above example, the operation 340 is optional. For example, in a case where a model of an activated AI functionality preferred by the network device configured by the network device is successfully activated, the terminal equipment may not feed back the response message to the network device.

According to the above example, the network device indicates, via the first indication information, configuration information of a preferred model (model configuration information) of an AI functionality configured by the network device, to the terminal equipment, thereby to a certain extent, control for model selection of an activated AI functionality can be achieved, and flexibility of network control is improved.

In some other embodiments, the terminal equipment receives second indication information transmitted by the network device, the second indication information being used to indicate that the terminal equipment transmits information on an activated model of at least one AI functionality to the network device.

In the above embodiments, the network device indicates the terminal equipment to report the information on an activated model of at least one AI functionality to the network device via the second indication information, thereby the terminal equipment may transmit the information on an activated model of at least one AI functionality to the network device according to the second indication information, thus the network device is able to perform corresponding control according to a model of an AI functionality activated by the terminal equipment, which improves flexibility of control.

In the above embodiments, if the terminal equipment changes the activated model of the at least one AI functionality, the terminal equipment may report information on a latest activated model to the network device. Thus, the terminal equipment may promptly report information on the latest activated model to the network device in a case where the activated model is updated, which further improves flexibility of network control.

In the above embodiments, the terminal equipment may further transmit an AI functionality associated with the information on the activated model to the network device. Thus, in a case where the network device configures a plurality of activated AI functionalities, relevant information on a model of each activated AI functionality may be known, and selection of a model of each AI functionality may be controlled in a targeted manner.

FIG. 4 is a schematic diagram of information exchange between a terminal equipment and a network device according to the method in the above embodiments. In an example in FIG. 4, that an AI operation configured by the first configuration information is "activation" is taken as an example, however the present disclosure is not limited thereto, the AI operation configured by the first configuration information may further be any one or more of those listed above. As shown in FIG. 4, a process of the information exchange includes:
410: the network device receives first information, the first information being used to indicate information related to an AI functionality;
420: the terminal equipment receives first configuration information transmitted by the network device, the first configuration information including second indication information, and the second indication information being used to indicate a terminal equipment to report information on an activated model to the network device;

In the above embodiments, if the terminal equipment is able to successfully apply the first configuration information, step 430 is executed; if the terminal equipment is unable to apply at least part of configuration corresponding to the first configuration information, step 460 is executed.
430: the terminal equipment performs corresponding AI operations according to the first configuration information;
440: the terminal equipment transmits information on an activated model to the network device;
450: when the terminal equipment changes the activated model, the terminal equipment indicates information on a latest activated model to the network device; and
460: the terminal equipment transmits a first response message to the network device, and via the first response message, it is indicated that the terminal equipment is unable to apply at least part of configuration corresponding to the first configuration information.

It is worth noting that the above FIG. 4 only schematically describes embodiments of the present disclosure, however the present disclosure is not limited thereto. For example, some other operations may be added or certain operations therein may be reduced. Persons skilled in the art may make appropriate modifications according to the above contents, not being limited to records in the above FIG. 4.

In operation 410, content related to the first information is the same as that in operation 310, and is not repeated here.

In operation 420, content related to the first configuration information is the same as that in operation 320. For example, it is used to configure an AI operation. As an example, the first configuration information is used to indicate that the terminal equipment activates a certain AI functionality, for example activate functionality 1.

In operation 420, the second indication information is used to indicate that the terminal equipment reports information on an activated model to the network device. Correspondingly, after executing operation 430, the terminal equipment may execute operation 440, that is, transmit information on an activated model to the network device. As a further possible implementation, in operation 420, the second indication information may be used to indicate that the terminal equipment reports information on a latest activated model. Correspondingly, after executing operation 430, the terminal equipment may execute operation 440 according to the second indication information, i.e., transmit information on an activated model to the network device; when an activated model at the terminal device side changes, the terminal equipment may execute operation 450 according to the second indication information, i.e., indicate information on a latest activated model to the network device. For relevant content of the information on the model, description in the above embodiments is referred to and is not repeated here.

In operation 430, the terminal equipment may perform a corresponding AI operation (i.e., configure the AI functionality) according to the first configuration information. For example, the terminal equipment activates functionality 1 according to the first configuration information. In addition, through specific implementations, the terminal equipment may further select and activate a model of the functionality 1.

In operation 440, the terminal equipment may transmit information on an activated model to the network device according to the second indication information. It is understandable that a terminal equipment may further indicate information on functionality associated with information on an activated model to the network device. For example, the terminal equipment activates model 1 of functionality 1, and indicates to the network device that an activated model is model 1 of functionality 1. Thus, in a case where there is a plurality of activated functionalities at the terminal equipment side, through this mode, the network device may determine information on an activated model of an activated functionality.

In operation 450, the terminal equipment may indicate information on a latest activated model to the network device when changing the activated model. For example, when the terminal equipment deactivates model 1 and activates model 2, the terminal equipment may indicate to the network device that a current active model is model 2. Thus, it facilitates the network device to know information on the latest activated model of an AI functionality. In the above example, operation 450 is optional. In some implementations, the terminal equipment may not report the information on the latest activated model to the network device.

According to the above example, the network device indicates, via the second indication information, the terminal equipment to report information on a model of an activated AI functionality, thereby to a certain extent, control for model selection of an activated AI functionality can be achieved, and flexibility of network control is improved.

Each of the above embodiments is only exemplary description of the method in the embodiments of the present disclosure, however the present disclosure is not limited thereto, and appropriate variation(s) may be further made based on each of the above embodiments. For example, each of the above embodiments may be used individually, or one or more of the above embodiments may be combined. For example, the network device not only indicates, via the first indication information, the model configuration information of at least one AI functionality, preferred by the network device, but also indicates, via the second indication information, the terminal equipment to transmit information on an activated model of at least one AI functionality to the network device. Specific implementation process is as described above and is not repeated here.

According to the method in embodiments of the present disclosure, the network device may control, to some extent, a model activated at a terminal equipment side in functionality based LCM, or, the network device may perceive information on a model activated at a terminal equipment side in functionality based LCM, thereby better implementing functionalities/model control.

### Embodiments of a Second Aspect

Embodiments of the present disclosure provide a method for configuring AI functionalities, which is described from a network device side. A principle of the method for solving a problem is the same as that of embodiments of the first aspect, and description of the same contents is not repeated.

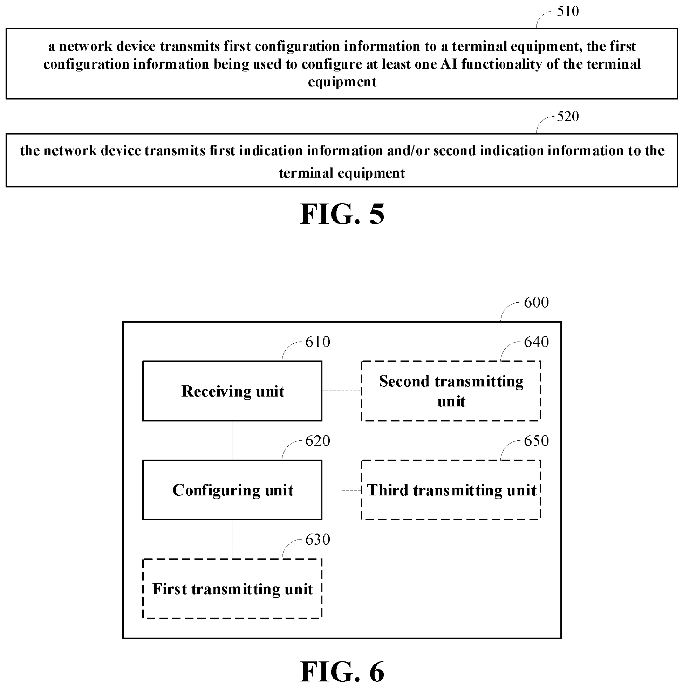

FIG. 5 is a schematic diagram of the method for configuring AI functionalities in embodiments of the present disclosure, as shown in FIG. 5, the method includes:
510: a network device transmits first configuration information to a terminal equipment, the first configuration information being used to configure at least one AI functionality of the terminal equipment; and
520: the network device transmits first indication information and/or second indication information to the terminal equipment.

In some embodiments, the network device further receives a first response message transmitted by the terminal equipment, the first response message being used to indicate whether the terminal equipment successfully configures the at least one AI functionality according to the first configuration information and the first indication information.

In some embodiments, the network device further receives information on an activated model of the at least one AI functionality, transmitted by the terminal equipment according to the second indication information.

In the above embodiments, the network device may further receive information on a latest activated model reported by the terminal equipment in case of changing the activated model of the at least one AI functionality.

In the above embodiments, the network device may further receive AI functionalities associated with the information on the activated model, transmitted by the terminal equipment.

In the above embodiments, relevant contents of the first configuration information, the first indication information, the second indication information, and the first response message are the same as those in embodiment of the first aspect, and their contents are incorporated herein and are not repeated here.

Each of the above embodiments is only exemplary description of the method in the embodiments of the present disclosure, however the present disclosure is not limited thereto, and appropriate variation(s) may be further made based on each of the above embodiments. For example, each of the above embodiments may be used individually, or one or more of the above embodiments may be combined. For example, the network device not only indicates, via the first indication information, the model configuration information of at least one AI functionality, preferred by the network device, but also indicates, via the second indication information, the terminal equipment to transmit information on an activated model of at least one AI functionality to the network device. Specific implementation process is as described above and is not repeated here.

According to the method in embodiments of the present disclosure, the network device may control, to some extent, a model activated at a terminal equipment side in functionality based LCM, or, the network device may perceive information on a model activated at a terminal equipment side in functionality based LCM, thereby better implementing functionalities/model control.

### Embodiments of a Third Aspect

Embodiments of the present disclosure provide an apparatus for configuring AI functionalities.

FIG. 6 is a schematic diagram of the apparatus for configuring AI functionalities in embodiments of the present disclosure, the apparatus may be e.g., a terminal equipment, or may be one or more parts or components configured in a terminal equipment. A principle of the apparatus to solve problems is same as the method in the embodiments of a first aspect, thus a specific implementation thereof may refer to implementation of the method in the embodiments of the first aspect, the same contents will not be repeated. As shown in FIG. 6, the apparatus 600 includes:
a receiving unit 610 configured to receive first configuration information transmitted by a network device, the first configuration information being used to configure at least one AI functionality of a terminal equipment; and
a configuring unit 620 configured to configure the at least one AI functionality according to the first configuration information.

In some embodiments, the receiving unit 610 further receives first indication information transmitted by the network device, the first indication information being used to indicate model configuration information of the at least one AI functionality, preferred by the network device.

In the above embodiments, model configuration information preferred by the network device may include at least one of the following:
model information preferred by the network device;
network configuration information of a model preferred by the network device;
inference accuracy configuration information preferred by the network device;
inference latency configuration information preferred by the network device;
inference output result information preferred by the network device;
inference credibility configuration information preferred by the network device;
network device vendor information corresponding to a model preferred by the network device;
terminal equipment vendor information corresponding to a model preferred by the network device; or
chip device vendor information corresponding to a model preferred by the network device.

In some embodiments, that the configuring unit 620 configures the at least one AI functionality according to the first configuration information includes that:
the configuring unit 620 determines information on an available model of the at least one AI functionality according to the first configuration information and the first indication information.

In the above embodiments, as shown in FIG. 6, the apparatus 600 may further include:
a first transmitting unit 630 configured to transmit a first response message to the network device, the first response message being used to indicate whether the terminal equipment successfully configures the at least one AI functionality according to the first configuration information and the first indication information.

In the above embodiments, the first response message may include information on an AI functionality that is successfully configured in the at least one AI functionality, and/or, information on an AI functionality that is not successfully configured in the at least one AI functionality.

In the above embodiments, if the terminal equipment fails to successfully configure at least one AI functionality in the at least one AI functionality, the first response message may further include a failure cause for the at least one AI functionality that is not successfully configured.

In the above embodiments, the failure cause may include at least one of the following:
there is no available model;
an available model is unable to be determined according to the first indication information;
a configuration transmitted by the network device is not supported;
AI resources are not sufficient; or
information on insufficient AI resources.

In some embodiments, the receiving unit 610 further receives second indication information transmitted by the network device, the second indication information being used to indicate that the terminal equipment transmits information on an activated model of the at least one AI functionality to the network device.

In the above embodiments, as shown in FIG. 6, the apparatus 600 may further include:
a second transmitting unit 640 configured to transmit information on an activated model of the at least one AI functionality to the network device.

In the above embodiments, the second transmitting unit 640 may further transmit AI functionalities associated with the information on the activated model to the network device.

In the above embodiments, as shown in FIG. 6, the apparatus 600 may further include:
a third transmitting unit 650 configured to further report information on a latest activated model to the network device if the terminal equipment changes the activated model of the at least one AI functionality.

In the above embodiments, the third transmitting unit 650 may further transmit AI functionalities associated with the information on the activated model to the network device.

In embodiments of the present disclosure, first configuration information may include but be not limited to at least one of activation, deactivation, change, fallback to non-AI configuration, release, or suspension of an AI functionality.

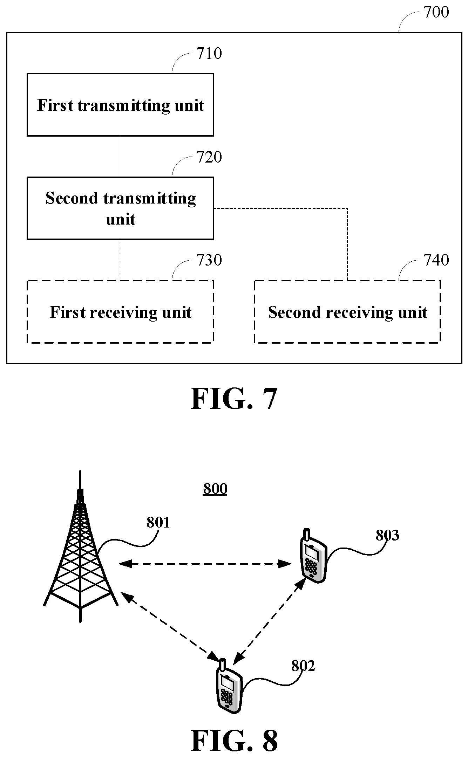

FIG. 7 is another schematic diagram of an apparatus for configuring AI functionalities in embodiments of a third aspect of the present disclosure, the apparatus may be e.g., a network device, or may be one or more parts or components configured in a network device. Principle of the apparatus to solve a problem is same as that of the method in embodiments of the second aspect, thus for its specific implementation, implementation of the method in embodiments of the second aspect may be referred to, same contents are not repeated. As shown in FIG. 7, the apparatus 700 includes:
a first transmitting unit 710 configured to transmit first configuration information to a terminal equipment, the first configuration information being used to configure at least one AI functionality of the terminal equipment; and
a second transmitting unit 720 configured to transmit first indication information and/or second indication information to the terminal equipment, the first indication information being used to indicate model configuration information of the at least one AI functionality, preferred by the network device, and the second indication information being used to indicate that the terminal equipment transmits information on an activated model of the at least one AI functionality to the network device.

In the above embodiments, as shown in FIG. 7, the apparatus 700 may further include:
a first receiving unit 730 configured to receive a first response message transmitted by the terminal equipment, the first response message being used to indicate whether the terminal equipment successfully configures the at least one AI functionality according to the first configuration information and the first indication information.

In the above embodiments, as shown in FIG. 7, the apparatus 700 may further include:
a second receiving unit 740 configured to receive information on an activated model of the at least one AI functionality, transmitted by the terminal equipment according to the second indication information.

In the above embodiments, the second receiving unit 740 may further receive information on a latest activated model reported by the terminal equipment in case of changing the activated model of the at least one AI functionality.

In the above embodiments, the second receiving unit 740 may further receive AI functionalities associated with the information on the activated model, transmitted by the terminal equipment.

The above text provides an exemplary description of embodiments of the present disclosure, but the present disclosure is not limited thereto, appropriate variation(s) may be further made based on each of the above embodiments. For example, each of the above embodiments may be used individually, or one or more of the above embodiments may be combined.

It is worth noting that the above text only describes components or modules related to the present disclosure, however the present disclosure is not limited thereto. The apparatus may further include other components or modules. For detailed contents of these components or modules, relevant technologies may be referred to. Moreover, each of the above components or modules may be implemented via a hardware facility such as a processor, a memory, a transmitter, a receiver, etc. Embodiments of the present disclosure have no limitation thereto.

According to an apparatus in embodiments of the present disclosure, the network device may control, to some extent, a model activated at a terminal equipment side in functionality based LCM, or, the network device may perceive information on a model activated at a terminal equipment side in functionality based LCM, thereby better implementing functionalities/model control.

### Embodiments of a Fourth Aspect

Embodiments of the present disclosure further provide a communication system, including a network device and a terminal equipment.

FIG. 8 is a schematic diagram of the communication system in embodiments of the present disclosure, schematically describing a situation by taking a terminal equipment and a network device as an example, and as shown in FIG. 8, the communication system 800 may include a network device 801 and terminal equipments 802, 803. For simplicity, FIG. 8 only takes two terminal equipments and one network device as an example for description, however embodiments of the present disclosure are not limited thereto.

In embodiments of the present disclosure, transmission of existing services or future implementable services may be performed between the network device 801 and the terminal equipments 802, 803. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 8 shows that two terminal equipments 802 and 803 are within a coverage range of the network device 801, however the present disclosure is not limited thereto. The two terminal equipments 802 and 803 may be not within a coverage range of the network device 801, or one terminal equipment 802 is within a coverage range of the network device 801 while the other terminal equipment 803 is outside a coverage range of the network device 801.

In some embodiments, the terminal equipment includes the apparatus 600 in embodiments of the third aspect, configured to perform the method in embodiments of the first aspect. Since the method has been described in details in embodiments of the first aspect, contents thereof are incorporated here and are not repeated.

In some embodiments, the network device includes the apparatus 700 in embodiments of the third aspect, configured to perform the method in embodiments of the second aspect. Since the method has been described in details in embodiments of the second aspect, contents thereof are incorporated here and are not repeated.

Embodiments of the present disclosure further provide a terminal equipment, the terminal equipment for example may be a UE, however the present disclosure is not limited thereto, the terminal equipment may further be other terminal equipment.

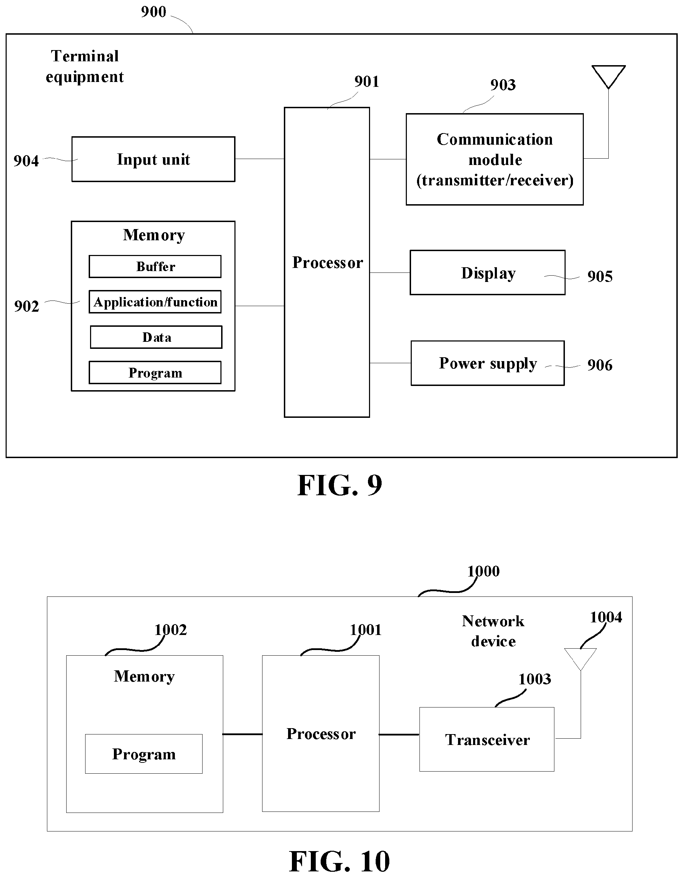

FIG. 9 is a schematic diagram of the terminal equipment in embodiments of the present disclosure. As shown in FIG. 9, the terminal equipment 900 may include a processor 901, and a memory 902 storing data and programs and coupled to the processor 901. It is worth noting that this figure is exemplary, other types of structures may further be used to supplement or replace this structure, so as to implement a telecommunication function or other functions.

In some embodiments, functions of the apparatus 600 in embodiments of the third aspect may be integrated into the processor 901, wherein the processor 901 may be configured to execute a program to implement the method as described in embodiments of the first aspect, contents thereof are incorporated here and are not repeated here.

In some other embodiments, the apparatus 600 in embodiments of the third aspect may be configured separately from the processor 901, for example the apparatus 600 in embodiments of the third aspect may be configured as a chip connected to the processor 901, and functions of the apparatus 600 in embodiments of the third aspect are implemented through control of the processor 901.

As shown in FIG. 9, the terminal equipment 900 may further include: a communication module 903, an input unit 904, a display 905, and a power supply 906. Functions of the above components are similar to related arts, and are not further elaborated here. It is worth noting that the terminal equipment 900 does not have to include all components shown in FIG. 9, the above components are not indispensable. Moreover, the terminal equipment 900 may further include components not shown in FIG. 9, and relevant technologies may be referred to.

Embodiments of the present disclosure further provide a network device, the network device for example may be a base station, however the present disclosure is not limited thereto, the network device may further be other network devices.

FIG. 10 is a schematic diagram of the network device in embodiments of the present disclosure. As shown in FIG. 10, the network device 1000 may include: a processor 1001, and a memory 1002 coupled to the processor 1001. The memory 1002 may store various data; moreover, further stores a program for information processing, and executes the program under control of the processor 1001.

In some embodiments, functions of the apparatus 700 in embodiments of the third aspect may be integrated into the processor 1001, wherein the processor 1001 may be configured to execute a program to implement the method in embodiments of the second aspect, contents thereof are incorporated here and are not repeated here.

In some other embodiments, the apparatus 700 in embodiments of the third aspect may be configured separately from the processor 1001, for example the apparatus 700 in embodiments of the third aspect may be configured as a chip connected to the processor 1001, and functions of the apparatus 700 in embodiments of the third aspect are implemented through control of the processor 1001.

In addition, as shown in FIG. 10, the network device 1000 may further include: transceivers 1003 and 1004. Functions of the above components are similar to related arts, and are not further elaborated here. It is worth noting that the network device 1000 does not have to include all components shown in FIG. 10. Moreover, the network device 1000 may further include components not shown in FIG. 10, related arts may be referred to.

Embodiments of the present disclosure further provide a computer program, wherein when a terminal equipment executes the program, the program enables the terminal equipment to execute the method in embodiments of the first aspect.

Embodiments of the present disclosure further provide a storage medium in which a computer program is stored, wherein the computer program enables a terminal equipment to execute the method in embodiments of the first aspect.

Embodiments of the present disclosure further provide a computer program, wherein when a network device executes the program, the program enables the network device to execute the method in embodiments of the second aspect.

Embodiments of the present disclosure further provide a storage medium in which a computer program is stored, wherein the computer program enables a network device to execute the method in embodiments of the second aspect.

Apparatuses and methods in the present disclosure may be implemented by hardware, or may be implemented by combining hardware with software. The present disclosure relates to such a computer readable program, when the program is executed by a logic component, the logic component is able to implement the apparatuses described in the above text or a constituent component, or the logic component is able to implement various methods or steps described in the above text. The present disclosure further relates to a storage medium storing said programs, such as a hard disk, a magnetic disk, an optical disk, a DVD, a flash memory and the like.

Methods/apparatuses described by combining with embodiments of the present disclosure may be directly embodied as hardware, a software module executed by a processor, or a combination of the two. For example, one or more of functional block diagrams as shown in drawings or one or more combinations of functional block diagrams may correspond to software modules of a computer program process, or may correspond to hardware modules. These software modules may respectively correspond to steps shown in drawings. These hardware modules may be implemented by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM, or a storage medium in any other form as known in the art. A storage medium may be coupled to a processor, thus enabling the processor to read information from the storage medium and write information into the storage medium, or the storage medium may be a constituent part of a processor. A processor and a storage medium may be located in an ASIC. The software module may be stored in a memory of a mobile terminal, or may be stored in a memory card that may be inserted into a mobile terminal. For example, if a device (e.g., a mobile terminal) adopts a MEGA-SIM card with a larger capacity or a flash memory apparatus with a large capacity, the software module may be stored in the MEGA-SIM card, or in the flash memory apparatus with a large capacity.

One or more of functional block diagrams described in drawings or one or more combinations of functional block diagrams may be implemented as a general-purpose processor for performing functions described in the present disclosure, a digital signal processor (DSP), an application-specific integrated circuit (ASIC), a field-programmable gate array (FPGA) or other programmable logic device, a discrete gate or a transistor logic device, a discrete hardware component, or any appropriate combination thereof. One or more of functional block diagrams described in drawings or one or more combinations of functional block diagrams may further be implemented as a combination of computing devices, such as a combination of a DSP and a microprocessor, a plurality of microprocessors, one or more microprocessors combined and communicating with a DSP, or any other such configuration.

The present disclosure is described above by combining with specific implementations, however persons skilled in the art should clearly know that these descriptions are exemplary and do not limit a protection scope of the present disclosure. Persons skilled in the art may make various variations and amendments to the present disclosure according to spirits and principles of the present disclosure, these variations and amendments are also within a scope of the present disclosure.

## Claims

1. An apparatus for configuring AI functionalities, configured in a terminal equipment, wherein the apparatus comprises:
a receiving unit configured to receive first configuration information transmitted by a network device, the first configuration information being used to configure at least one AI functionality of the terminal equipment; and
a configuring unit configured to configure the at least one AI functionality according to the first configuration information.

2. The apparatus according to claim 1, wherein,
the receiving unit further receives first indication information transmitted by the network device, the first indication information being used to indicate model configuration information of the at least one AI functionality, preferred by the network device.

3. The apparatus according to claim 2, wherein the model configuration information preferred by the network device includes at least one of the following:
model information preferred by the network device;
network configuration information of a model preferred by the network device;
inference accuracy configuration information preferred by the network device;
inference latency configuration information preferred by the network device;
inference output result information preferred by the network device;
inference credibility configuration information preferred by the network device;
network device vendor information corresponding to a model preferred by the network device;
terminal equipment vendor information corresponding to a model preferred by the network device; or
chip device vendor information corresponding to a model preferred by the network device.

4. The apparatus according to claim 2, wherein that the configuring unit configures the at least one AI functionality according to the first configuration information comprises that:
the configuring unit determines information on an available model of the at least one AI functionality according to the first configuration information and the first indication information.

5. The apparatus according to claim 4, wherein the apparatus further comprises:
a first transmitting unit configured to transmit a first response message to the network device, the first response message being used to indicate whether the terminal equipment successfully configures the at least one AI functionality according to the first configuration information and the first indication information.

6. The apparatus according to claim 5, wherein,
the first response message includes information on an AI functionality that is successfully configured in the at least one AI functionality, and/or, information on an AI functionality that is not successfully configured in the at least one AI functionality.

7. The apparatus according to claim 6, wherein,
if the configuring unit fails to successfully configure at least one AI functionality in the at least one AI functionality, the first response message further includes a failure cause for the at least one AI functionality that is not successfully configured.

8. The apparatus according to claim 7, wherein the failure cause includes at least one of the following:
there is no available model;
an available model is unable to be determined according to the first indication information;
a configuration transmitted by a network device is not supported;
AI resources are not sufficient; or
information on insufficient AI resources.

9. The apparatus according to claim 1, wherein,
the receiving unit further receives second indication information transmitted by the network device, the second indication information being used to indicate that the terminal equipment transmits information on an activated model of the at least one AI functionality to the network device.

10. The apparatus according to claim 9, wherein the apparatus further comprises:
a second transmitting unit configured to transmit the information on an activated model of the at least one AI functionality to the network device, according to the second indication information.

11. The apparatus according to claim 9, wherein the apparatus further comprises:
a third transmitting unit configured to report information on a latest activated model to the network device if the terminal equipment changes the activated model of the at least one AI functionality.

12. The apparatus according to claim 10, wherein,
the second transmitting unit further transmits AI functionalities associated with the information on the activated model to the network device.

13. The apparatus according to claim 1, wherein,
the first configuration information includes at least one of activation, deactivation, change, fallback to non-AI configuration, release, or suspension of an AI functionality.

14. An apparatus for configuring AI functionalities, configured in a network device, wherein the apparatus comprises:
a first transmitting unit configured to transmit first configuration information to a terminal equipment, the first configuration information being used to configure at least one AI functionality of the terminal equipment; and
a second transmitting unit configured to transmit first indication information and/or second indication information to the terminal equipment, the first indication information being used to indicate model configuration information of the at least one AI functionality, preferred by the network device, and the second indication information being used to indicate that the terminal equipment transmits information on an activated model of the at least one AI functionality to the network device.

15. The apparatus according to claim 14, wherein the apparatus further comprises:
a first receiving unit configured to receive a first response message transmitted by the terminal equipment, the first response message being used to indicate whether the terminal equipment successfully configures the at least one AI functionality according to the first configuration information and the first indication information.

16. The apparatus according to claim 14, wherein the apparatus further comprises:
a second receiving unit configured to receive information on an activated model of the at least one AI functionality, transmitted by the terminal equipment according to the second indication information.

17. The apparatus according to claim 16, wherein,
the second receiving unit further receives information on a latest activated model reported by the terminal equipment in case of changing the activated model of the at least one AI functionality.

18. The apparatus according to claim 16, wherein,
the second receiving unit further receives AI functionalities associated with the information on the activated model, transmitted by the terminal equipment.

19. A terminal equipment, comprising a memory and a processor, the memory storing a computer program, **characterized in that** the processor is configured to execute the computer program to implement the following method:
receiving first configuration information transmitted by a network device, the first configuration information being used to configure at least one AI functionality of the terminal equipment; and
configuring the at least one AI functionality according to the first configuration information.

20. The terminal equipment according to claim 19, **characterized in that** the processor is further configured to execute the computer program to implement the following method:
receiving first indication information transmitted by the network device, the first indication information being used to indicate model configuration information of the at least one AI functionality, preferred by the network device; and/or,
receiving second indication information transmitted by the network device, the second indication information being used to indicate that the terminal equipment transmits information on an activated model of the at least one AI functionality to the network device.
